**Europäisches Patentamt**

**European Patent Office**

**Office européen des brevets**

(19)

(11) Publication number: **0 007 685**
**B1**

(12) ## EUROPEAN PATENT SPECIFICATION

(45) Date of publication of patent specification: **22.09.82**

(21) Application number: **79300974.7**

(22) Date of filing: **29.05.79**

(51) Int. Cl.³: **B 65 D 53/08** //B65B7/02, B65D85/72, B65D30/24

(54) Flexible container for liquids.

(30) Priority: **30.05.78 AU 4550/78**

(43) Date of publication of application:
**06.02.80 Bulletin 80/3**

(45) Publication of the grant of the patent:
**22.09.82 Bulletin 82/38**

(84) Designated Contracting States:
**AT BE CH DE FR GB IT LU NL SE**

(56) References cited:
**DE - B - 1 201 749**
**DE - A - 1 956 542**
**US - A - 3 935 975**

(73) Proprietor: **WRIGHTCEL LTD.**
**Cato Street**
**Auburn, Victoria (AU)**

(72) Inventor: **Mellett, Lee Tasman**
**135, Watsons Road**
**Glen Waverley, Victoria (AU)**

(74) Representative: **Arthur, George Fitzgerald et al,**
**KILBURN & STRODE 30, John Street**
**London WC1N 2DD (GB)**

Courier Press, Leamington Spa, England.

Flexible container for liquids

The present invention relates to flexible containers which may or may not be housed within an outer, relatively rigid box-like structure. Such containers are suitable for use as bulk containers for wines and like liquids, which liquids are normally susceptible to deterioration through oxidation. Bulk wine containers are commonly referred to as wine casks, and in recent years such casks have become more widely used.

Whilst there has been a widespread acceptance of wine casks, there are still problems of oxidation to contend with during storage and before consumption.

One form of wine cask, for example, embodying a dispensing tap affixed to the flexible bag and extending through a wall of the outer box, suffers from air entering the bag via the tap despite the fact that the tap and bag are supposedly in air-tight relationship. The bag is filled with wine via the tap or a collar to which the tap is later affixed.

Another form of wine cask affords an air-impermeable, rupturable diaphragm at the dispensing point, with a tap which can be coupled to the bag in such manner as to rupture the diaphragm when the wine is to be consumed. Air is thus not able to enter the bag at the dispensing point until the diaphragm has been ruptured. However, the inclusion of a diaphragm means that the bag must be filled other than through the tap hole — in fact, via the top of the bag which must be left open until full. Filling in this manner is less than satisfactory because a good deal of air enters the top of the bag together with the wine. Also, dust and other impurities enter in this way. A wine cask of this type is described in Australian Patent Numbers 402,978 and 435,591.

German Patent DE A 1956542 discloses a sterile flexible container incorporating a rupturable membrane heat sealed over an opening in the container wall. However no use is made of this membrane for filling the container, which is filled after the membrane is welded to the container wall. The nipple for emptying the container is welded to the membrane after the container is filled. Further there is no provision or possibility that the membrane can be welded to the wall by application of heat and pressure through the opposite wall of the container. This specification 1956542 does not provide a solution for sterile filling of flexible containers.

It is an object of the present invention to provide a flexible container having improved storage characteristics. The invention of course may be used in conjunction with liquids other than wine, as previously indicated.

It is a further object of the present invention to provide a simple labour saving method of assembling the container and taps.

According to the invention there is provided a flexible container having a wall including a heat sealable collar secured about a hole in the wall, wherein the collar is for receiving a dispensing means, characterised in that the collar is also for filling the container and further characterised by a flap disposed inside the container in juxtaposition with the collar for heat sealing the collar, the flap including a first heat sealable surface and a second non-heat sealable surface, the first and second surfaces facing towards and away from the collar, respectively.

A problem in assembling the bulk container and dispensers as disclosed in Australian Patent Numbers 402,978 and 435,591 is that in forming the tap socket on the wall of the container one component, the retaining ring, must be inserted inside the container and clamped over the surface of the external socket member to provide the frangible diaphragm (a portion of the container wall) within the collar. The operation of fitting the retaining ring to the socket is accomplished manually.

In the present invention the collar may be simply glued or sealed to a wall of the flexible container and a hole may be formed in the wall of the container. This operation can be carried out automatically by machinery with none of the difficulties associated with inserting a retaining ring inside a flexible container and then locating this ring onto a socket outside of the container while retaining a portion of the container wall between the ring and socket.

Generally, the flexible bag when empty assumes a substantially rectangular configuration, one half being heat sealed to the other about the periphery. Preferably, the fixed end of the flap is sandwiched between a heat-sealed, peripheral portion of the bag, but alternatively, it may be bonded to one wall or to the collar.

The flap may be a laminate of polyethylene and polyvinylidene chloride (pvdc) and nylon, the former being heat-sealable but not so the latter. Preferably, though not necessarily, the walls are also in laminate form.

The flexible container may be housed within an outer, relatively rigid container, preferably in the form of a box. The collar preferably extends through the wall of the box.

The flexible container is capable of being filled through the collar and in a preferred embodiment, heat and pressure may be applied to the container when full in the region of the flap so that the heat-sealable surface of the flap is pressed against the collar and is heat-sealed thereto, thereby providing an air-impermeable diaphragm. Preferably, the diaphragm is rupturable by the dispensing means when this is accommodated by the collar. The dispensing means conveniently comprises a tap having a sharpened inner end adapted to pierce the diaphragm.

It may be seen that, a container in accordance with the invention may be filled substantially without any air coming into contact with the liquid. Furthermore, the container may be emptied substantially without the contents remaining in the container being exposed to the atmosphere.

The invention may be carried into practice in various ways and one embodiment will be described by way of example with reference to the accompanying drawings in which:—

Figure 1 illustrates a part of a flexible bag in accordance with the invention, during the course of filling;

Figure 2 illustrates the same part, after filling, and sealing of the flap in association with a dispensing tap; and

Figure 3 illustrates, in enlarged form the various walls and flap constructions of the flexible bag shown in Figure 1.

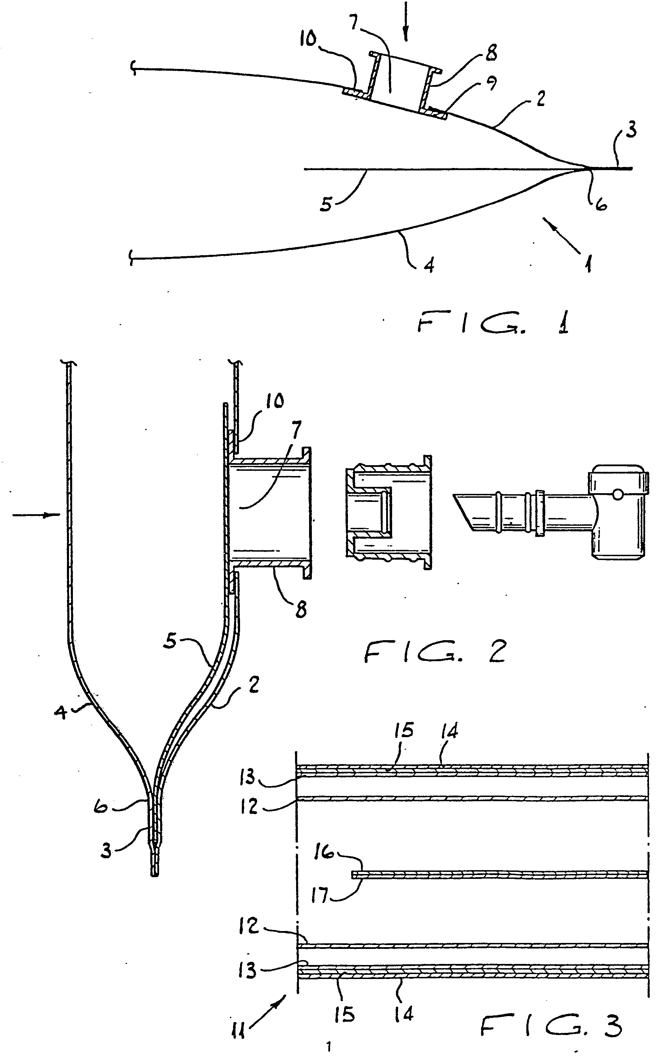

Referring to Figure 1, a bag — generally designated as 1 — comprises a wall 2 heat sealed at the periphery 3 to a lower wall 4. An internal flap 5 has its fixed end 6 sandwiched (and also heat sealed) between the two halves 2, 4 at the periphery 3. The flap 5 extends across and beyond an opening 7 in the flexible container wall 2 into which fits a collar 8. The flange 9 of the collar 8 is heat sealed to the periphery 10 of the opening. The flap 5 does not impede filling of the bag. The collar 8 is secured to wall 2 by suitable machinery.

Once the bag is full, a hot press (not shown) is brought to bear on the bag in the direction shown by the arrow in Figure 2 in the region of the collar with the result that the flap becomes heat sealed to the wall 2 and the collar 8 but not the wall 4 of the container.

In Figure 2 in exploded view is shown the tap construction comprising a tap socket which can be fitted snugly into the collar 8 and a tap which includes a piercing pipe that ruptures the flap covering opening 7 when it is secured within the socket which in turn is secured in the collar 8.

As shown in Figure 3, each wall 2 and 4 comprises an outer laminate 11 and an inner but separate layer of polyethylene 12. The laminate 11 has an inner layer 13 of polyethylene, an outer layer 14 of nylon and an intermediate layer 15 of polyvinylidene chloride, a material sold under the Registered Trade Mark Saran. The flap, on the other hand, also in laminate form has a polyethylene layer 16 and a nonheatsealable layer 17.

The construction of this invention means that after construction of the flexible container but prior to its being filled the interior of the container is vertically closed by the flap 5 covering opening 7 whereas in the prior art one edge of the container was left unsealed to enable filling to occur. In the construction of this invention the flap does not obstruct filling of the flexible container but it does enable the interior to be kept dust free more effectively than prior art constructions. The presence of the flap and its ability to be heat sealed across the opening 7 also enables the contents to be sealed in an airtight leakage-free manner until the insertion of the tap.

## Claims

1. A flexible container (1) having a wall (2) including a heat sealable collar (8) secured about a hole (7) in the wall, wherein the collar is for receiving a dispensing means, characterised in that the collar is also for filling the container and further characterised by a flap (5) disposed inside the container in juxtaposition with the collar for heat sealing the collar, the flap including a first heat sealable surface and a second non-heat-sealable surface, the first and second surfaces facing towards and away from the collar, respectively.

2. A container as claimed in Claim 1 characterised in that it comprises two flexible walls (2), (4), heat sealed to each other around their peripheries.

3. A container as claimed in Claim 2 characterised in that the flap is heat sealed between the two walls along a part of its periphery (3).

4. A container as claimed in any of Claims 1 to 3 characterised by the flap comprising a laminate of polyethylene and polyvinylidene chloride and nylon.

5. A container as claimed in any of Claims 1 to 4 characterised by the walls (2, 4) of the container being in laminate form.

6. A container as claimed in Claim 5 characterised by the walls comprising a layer of polyethylene and a separate laminate of polyethylene, polyvinylidene chloride and nylon.

## Revendications

1. Récipient flexible (1) comportant une paroi (2) comprenant une tubulure soudable à chaud (8) fixée autour d'un trou (7) percé dans la paroi, la tubulure étant destinée à recevoir un dispositif de débit, caractérisé en ce que la tubulure est destinée également au remplissage du récipient et une patte (5) est disposée à intérieur du récipient et est juxtaposée à la tubulure en vue d'être soudée à chaud à celle-ci, la patte comprenant une première surface soudable à chaud et une deuxième surface non soudable à chaud, la première et la deuxième surface étant, respectivement, tournée vers la tubulure et opposée à celle-ci.

2. Récipient suivant la revendication 1, caractérisé en ce qu'il comprend deux parois flexibles (2), (4) soudées à chaud l'une à l'autre autour de leurs périphéries.

3. Récipient suivant la revendication 2, caractérisé en ce que la patte est soudée à chaud entre les deux parois suivant une partie de sa périphérie (3).

4. Récipient suivant l'une quelconque des revendications 1 à 3, caractérisé en ce que la patte est faite d'un stratifié de polyéthylène, de poly(chlorure de vinylidène) et de Nylon.

5. Récipient suivant l'une quelconque des revendications 1 à 4, caractérisé en ce que ses parois (2), (4) sont des parois stratifiées.

6. Récipient suivant la revendication 5, caractérisé en ce que les parois comprennent une épaisseur de polyéthylène et un stratifié distinct de polyéthylène, de poly(chlorure de vinylidène) et de Nylon.

**Patentansprüche**

1. Flexibler Behälter (1) mit einer Wand (2), die einen heißsiegelbaren, um ein Loch (7) in der Wand befestigten Kragen (8) aufweist, wobei der Kragen zur Aufnahme eines Abgabeglieds dient, dadurch gekennzeichnet, daß der Kragen auch zum Füllen des Behälters dient, und weiterhin gekennzeichnet durch eine Klappe (5), die innerhalb des Behälters neben dem Kragen zum Heißsiegeln desselben angeordnet ist, wobei die Klappe eine erste Heißsiegelfläche und eine zweite, nicht heißsiegelbare Fläche aufweist und die erste bzw. zweite Fläche dem Kragen zugewandt bzw. von diesem abgewandt sind.

2. Behälter nach Anspruch 1, dadurch gekennzeichnet, daß er flexible Wände (2, 4) aufweist, die über ihre Umfänge durch Heißsiegelung miteinander verbunden sind.

3. Behälter nach Anspruch 2, dadurch gekennzeichnet, daß die Klappe zwischen den beiden Wänden über einen Teil ihres Umfanges heißgesiegel ist.

4. Behälter nach einem der Ansprüche 1 bis 3, dadurch gekennzeichnet, daß die Klappe aus einem Laminat aus Polyäthylen und Polyvinylidenchlorid und Nylon besteht.

5. Behälter nach einem der Ansprüche 1 bis 4, dadurch gekennzeichnet, daß die Wände (2, 4) des Behälters laminiert sind.

6. Behälter nach Anspruch 5, dadurch gekennzeichnet, daß die Wände eine Polyäthylenschicht und ein getrenntes Laminat aus Polyäthylen, Polyvinylidenchlorid und Nylon aufweisen.

FIG. 1

FIG. 2

FIG. 3